# EUROPEAN PATENT APPLICATION

(11) **EP 1 094 312 A1**
(43) Date of publication of application: **25.04.2001**
(21) Application number: 99870213.8
(22) Date of filing: 18.10.1999
(51) Int. Cl.: G01N 21/88

(54) **Process of assessing the performance of a carpet cleaning composition**

(71) Applicant: THE PROCTER & GAMBLE COMPANY, Cincinnati, Ohio 45202 (US)
(72) Inventor: Desantis, Marco (NMN), 00141 Roma (IT); Pace, Luigi (NMN), 80067 Sorrento (IT)
(74) Representative: Morelle, Evelyne Charlotte Isabelle

(57) **Abstract**

The present invention relates to a process of assessing the cleaning performance of a carpet cleaning composition, the cleanliness of a carpet and the colour safety of a composition. More particularly, the present invention relates to such a process comprising the steps of applying a carpet cleaning composition onto the carpet and contacting the carpet with a cloth, piece of fabric and the like.

## Description

### Technical Field

The present invention relates to a process of assessing the cleaning performance and colour safety of a carpet cleaning composition and to a process of assessing the cleanliness of a carpet.

### Background of the Invention

Carpets produced from synthetic or natural fibers and mixtures thereof are commonly used in residential and commercial applications as a floor covering. Various types of fibers can be used in making carpets such as polyamide fibers, polyester fibers as well as wool, cotton or even silk in the case of rugs.

However, carpets irrespective of which type of fibres used, are all prone to soiling and staining when contacted with many household items. Indeed, the presence of such common household stains as food, grease, oils, beverages, in particular such as coffee, tea and soft drinks especially those containing acidic dyes, can cause unsightly, often dark stains on carpets. Also fibers may become soiled as a result of dirt particles, clay, dust and particulate soils in general, coming into contact with and adhering to the fibers of the carpet. These stains and soils may appear as localized spots ("spot stains") and/or in the form of a diffuse layer of soil. The latter named diffuse layer of soil may appear over large areas of the carpet or even over the whole carpet itself, and thereby giving said carpet a dingy appearance. Particularly, the dinginess tends to accumulate in the so called "high traffic areas" such as near doors as a result of intensive use of the carpets in such areas.

Liquid compositions for treating carpets are already known in the art. For example as disclosed in EP-A-0 629 694. To clean the diffuse layer of soils covering large areas of the carpet and/or the whole carpet, carpet cleaning compositions called "whole carpet cleaning compositions" or "whole carpet cleaners" are used, as for example disclosed in EP-A-0 949 324. Spot stains are typically removed using so-called "spotters".

However, it is understood that from a consumer, as well as from a manufacturer, viewpoint certain drawbacks are associated with the use of whole carpet cleaners. Those drawbacks are well known from consumer research. Indeed, for a consumer it is not only difficult to assess the cleanliness of a carpet before the use of such a whole carpet cleaning composition, but also after its use. Especially since, the diffuse layer of soils ("dinginess") can appear substantially evenly over large areas of the carpet. Furthermore, the dinginess increases slowly over time, which makes it difficult to judge whether the carpet is dirty or not and to what extent it is dirty. In addition, once a carpet has been cleaned and said dinginess has been removed equally over its whole extent, the consumer is prevented from recognising the extent of soil removed as a comparison of soiled and cleaned areas of the carpet at the same time is not possible. Indeed, the above mentioned lack of an opportunity for comparison prevents the consumer from recognizing the cleaning performance of a whole carpet cleaner. This makes it difficult for a manufacturer of such whole carpet cleaning compositions to communicate or advertise the benefits, in particular the cleaning performance, of said whole carpet cleaning compositions.

Thus, the objective of the present invention is to provide a process of assessing the cleaning performance and the colour safety of a carpet cleaning composition and/or to a process of assessing the cleanliness of a carpet.

It has now been found that the above objective can be met by processes as described herein.

An advantage of the processes as described herein is that said processes provide easy and fast ways for a consumer and/or the manufacturer of a carpet cleaning composition to assess the cleaning performance and the colour safety of a carpet cleaning composition and/or to assess the cleanliness of a carpet.

Advantageously, the processes according to the present invention provide excellent ways of assessing the cleaning performance and the colour safety of a carpet cleaning composition and/or assessing the cleanliness of a carpet cleaning performance, when used on a diffuse layer of soils spread over large parts or even over the whole carpet and/or on localized carpet stains (spot stains).

More advantageously, the processes according to the present invention can be used on different types of spot-stains and diffuse layers of soils, particularly in highly soiled, so called "high traffic areas", on particulate stains, greasy stains and the like.

A further advantage of the present invention is that the processes herein is applicable to all carpet types, especially delicate natural fibers. The present invention is also suitable to be used on hard wearing textiles and fabrics, e.g., upholstery, rugs, curtains.

Yet another advantage of the processes of the present invention is that they may be performed directly on the carpet without causing damage to the carpet. In particular, the processes used in the present process are safe to all known carpet dyes, even well known particularly sensitive natural dyes.

### Summary of the Invention

The present invention encompasses a process of assessing the cleanliness of a carpet comprising the steps of : applying a cleaning composition onto said carpet; contacting said carpet with a cloth; and grading said cloth, wherein the grading is achieved by comparing the initial and finishing cleanliness of the cloth.

The present invention further encompasses a process of assessing the cleaning performance of a cleaning composition comprising the steps of : applying said cleaning composition onto a carpet; contacting said carpet with a cloth; and grading said cloth, wherein the grading is achieved by comparing an initial and a finishing cleanliness of the cloth.

### Detailed Description of the Invention

The processes of assessing the cleanliness of a carpet and the cleaning performance of a cleaning composition, comprise the steps of:
applying a cleaning composition onto a carpet;
contacting said carpet with a cloth; and
grading said cloth, wherein the grading is achieved by comparing an initial and a finishing cleanliness of the cloth.

Preferably, the cleaning composition is applied onto the carpet prior to contacting the carpet with a cloth. Furthermore, the step of contacting the carpet with a cloth is preferably followed by the step of grading the cloth.

The composition can be applied to the carpet using any known means. For example the composition can be applied by pouring a liquid carpet cleaning composition or a solid carpet cleaning composition dissolved in an appropriate solvent over a carpet. Alternatively, the composition can be applied using spraying, shampooing, sponging, sprinkling techniques.

By "contacting a carpet with a cloth" it is meant herein, establishing physical contact between the surface of a carpet and a cloth, by for example sweeping said cloth over the carpet. In a preferred embodiment of the present invention, the cloth is used to impart mechanical action to the carpet. By "mechanical action" it is meant herein, agitation of the cloth on the carpet, as for example rubbing the carpet using the cloth, or applying pressure to the carpet with the cloth.

In a preferred embodiment, the composition applied onto the carpet is not left to substantially dry on the carpet. Typically, the composition is removed before it has dried on the carpet. Indeed, the step of contacting a carpet with a cloth after the cleaning composition has been applied is preferably performed as long as said carpet is still wet. Preferably, the composition is left on the carpet for less than 2 hours, preferably less than 1 hour, more preferably less than 40 minutes, even more preferably from 1 to 30 minutes and most preferably from 1 to 20 minutes.

Cloths for use herein include any suitable pieces of fabric. Indeed, said cloth may be made of any kind of textile, fabric or even paper material. Suitable fabrics for use herein include natural fabrics (e.g., fabrics made of cotton, viscose, linen, silk and wool), synthetic fabrics, such as those made of polymeric fibers of synthetic origin, as well as those made of both natural and synthetic fibers. Preferably, said cloth is made of a combination of natural and synthetic fibers as described herein above and more preferably said cloth is made of cotton and/or wool. Preferred cloths herein are sufficiently absorbent such that it is capable of absorbing at least a proportion of the cleaning composition.

Said cloth may be of any size. Preferably, said cloth has an area of from 0.0001 m² to 1 m², preferably from 0.01 m² to 0.2 m², more preferably from 0.05 m² to 0.1 m².

In a preferred embodiment said cloth has a light color. Preferably, the colour of the cloth is selected such that soil when present on the surface can be graded or preferably can be visibly seen. Even more preferably said cloth is white.

The cloth used to contact the carpet according to the present invention has an initial cleanliness. Initial cleanliness is defined as the cleanliness of the cloth before contact with the carpet. Indeed, said initial cleanliness includes any degree of soiling, but is preferably substantially devoid of soil, i.e., clean. Finishing cleanliness is defined as the cleanliness of the cloth after it has been used to contact the carpet. The cloth having the initial cleanliness is used to contact the carpet.

In the process of the present invention the cloth is graded by comparing the initial and the finishing cleanliness of the cloth. The step of grading the cloth can be done before and/or after contacting the carpet with the cloth. Furthermore, the step of grading the cloth can be done before and/or after applying the cleaning composition onto the carpet. In a preferred embodiment, the initial cleanliness of the cloth is determined before the cleaning composition is applied onto the carpet, the carpet is then contacted with the cloth and subsequently the finishing cleanliness of the cloth is determined.

The difference in initial and finishing cleanliness of the cloth can be graded visually and/or using any suitable instrument. The visual grading can be performed, by judging the difference in appearance between the initial and finishing cleanliness of the cloth. The difference in appearance can be graded using panel score units (PSU) ranging from 0, meaning no difference in appearance between the initial and finishing cleanliness of the cloth, to 4, meaning a clearly noticeable difference in appearance between the initial and finishing cleanliness of the cloth. The visual grading can be performed by the user of the process as disclosed herein (consumer) and/or by a group of expert panelists.

Instrumentally, the grading can also be performed with the help of Colorimeters such as Ganz Griesser® instruments (e.g., Datacolor® Spectraflash® SF 500, Machbet Whiteeye® 500) or ZEISS ELREPHO® or others that are available for instance from Hunterlab® or Gardner®.

In a preferred embodiment a single cloth is used in the process of the present invention. Alternatively, more than one cloth can be used. However, where more than one cloth is used, said cloths are substantially identical, especially in fabric and initial cleanliness.

By "cleaning composition" or "carpet cleaning composition" it is meant herein, any composition suitable for removing stains, soils, spots and the like from carpets or hard wearing textiles and fabrics. Indeed, any carpet cleaning composition, preferably a spotter and/or a whole carpet cleaning composition, more preferably of a whole carpet cleaning composition, may be used herein. Furthermore, the term "cleaning" herein also encompasses bleaching.

In addition, the processes as described herein may also be employed using compositions to treat carpets in other ways than cleaning and/or bleaching, as for example, perfuming, deodorizing, sanitizing, hygenising, UV protecting, color protecting, etc.. Indeed, processes comprising the same steps as described herein can be used to determine the color safety of any kind of treatment compositions applied onto a carpet.

The amount of the cleaning compositions applied to the carpet will depend on the severity of the staining or soiling of the carpet. In the case of stubborn stains a higher amount of cleaning composition may be employed. In a preferred embodiment of the present invention, at least 1 ml of said carpet cleaning composition is applied per 1 m² of carpet, preferably from 5 ml to 200 ml, more preferably from 10 ml to 50 ml, of said cleaning composition are applied per 1 m² of carpet

The area of the carpet on which the cleaning composition will be applied may be of any size. Indeed, the cleaning composition according to the present invention may be applied onto parts of the carpets, a complete section and/or the whole carpet.

In a preferred embodiment of the present invention, the cleaning composition is applied onto at least 0.0001 m², preferably from 0.1 m² to 50 m², more preferably from 0.2 m² to 20 m², of carpet.

In a preferred process according to the present invention, a liquid carpet cleaning composition is applied onto the carpet using a spraying device. Said spraying device is preferably a container that has at least one aperture through which the composition is dispensed to produce a spray of droplets.

Such a spray dispenser may comprise a means for delivering the composition by a pump ("pump spray dispenser") or may be operated by any source of pressurised gas such as an aerosol-can or a pressurizer. Pump spray dispensers may be manually operated or electrically operated.

Preferred spray dispensers herein are manually or electrically operated pump spray dispensers. Typical manually operated pump spray dispensers include push button operated or trigger operated pump spray dispenser. A preferred spray dispenser herein is a container wherein the means for delivering the composition comprises an electrically driven pump and a spray arm. Said spray arm is either extended or extendible and has at least one aperture so that in operation, the composition is pumped by said electrically driven pump from the container, through the spray arm to the aperture from which it is dispensed. It is preferred that the spray arm communicates with the container by means of a flexible connector. The spray arm may have at least one aperture located along its length. The spray arm makes it easier to control where the composition is sprayed, thereby increasing the accuracy with which the composition is applied. The electrically driven pump may be, for example, a gear pump, an impeller pump, a piston pump, a screw pump, a peristaltic pump, a diaphragm pump, or any other miniature pump. In a highly preferred embodiment the electrically driven pump for use herein is a gear pump with a typical speed between 6000 rpm and 12000 rpm. The electrically driven pump is driven by a means that typically produces a torque of between 1 and 20 mN.m such as an electric motor. The electric motor must in turn be provided with a power source. The power source may be either mains electricity (optionally via transformer), or it may be a throw-away battery or rechargeable battery. The spray arm may be rigidly extended. However such a spray arm can be difficult to store, and the spray arm is preferably extensible either by means of telescopic or foldable configuration.

In a preferred embodiment, further steps, as for example application of an additional cleaning composition and the like, may be performed before, in between and/or after any of the steps of the processes as described herein.

In a preferred embodiment said process, may further comprise the step of mechanically agitating the composition with an implement into the carpet layer. Any number of implements may be used to provide said mechanical agitation, including brushes, paper towels, a cleaning glove, a human finger and the like. By "mechanical agitation" it is meant herein, agitation of said implement on the carpet, as for example rubbing the carpet using the implement. Said mechanical agitation allows the composition to better penetrate into the carpet fibers and to improve the chemical cleaning action of said composition. In addition, said contact loosens the dirt particles forming the stain.

The steps of the process according to the present invention are preferably performed under "normal temperature" and "normal humidity conditions". By "normal temperature conditions" it is meant herein, from 15°C to 25° C, preferably from 20° C to 25° C. By "normal humidity conditions" it is meant herein, from 40 %RH (%-relative humidity) to 80 %RH, preferably from 50 %RH to 65 %RH.

It has now been found that the difference between initial and finishing cleanliness of the cloth can be interpreted as being the amount of soil/stain transferred from the carpet to the cloth ("soil/stain transfer rate").

In a preferred embodiment, the carpet herein is soiled/stained. By "soiled" it is meant herein that soils, as for example dirt particles, clay, dust and particulate soils in general, have come into contact with and adhere to the fibers of the carpet. By "stained" it is meant herein, that stains, as for example food-, grease, oils-, beverages-stains, appear on the carpet. Indeed, for a carpet to be soiled/stained, it has to be in use for an amount of time after being manufactured or thoroughly cleaned and/or has to be soiled/stained on purpose.

In a preferred embodiment, the process of the present invention is performed in the following sequence : applying the cleaning composition to the carpet; and subsequently contacting the carpet with a cloth. In a further preferred embodiment, the carpet is contacted with the cloth before and after the step of applying the cleaning composition to the carpet. Preferably the processes herein further comprise the step of transferring parts of the cleaning composition from the carpet to the cloth. Even more preferably said processes herein further comprise the step of transferring the cleaning composition in combination with soil/stain particles from the carpet to the cloth. It has been found that where a carpet onto which the cleaning composition has not yet been applied is contacted with the cloth, very little, preferably substantially no, transfer of soil from the carpet to the cloth takes place.

According to the present invention the process herein may be used on stains and soils occurring on carpets or hard wearing textiles and fabrics, e.g., upholstery rugs, curtains.

It has now been found that the processes as described herein allow a consumer to asses the cleanliness of a carpet before and/or after the use of any carpet cleaning composition, preferably of a spotter and/or a whole carpet cleaning composition, more preferably of a whole carpet cleaning composition. This is due to the fact that by grading the amount of soil transferred from the carpet to the cloth, using a process as described herein, the cleanliness of the carpet can be perceived by the consumer. Indeed, for example a low amount of soil transfer from the carpet to the cloth indicates the carpet is relatively clean, assuming a cleaning composition with a known cleaning performance has been used in the assessment process.

Furthermore, it becomes possible that a consumer can assess the cleaning performance of any carpet cleaning composition, preferably of a spotter and/or a whole carpet cleaning composition, more preferably of a whole carpet cleaning composition, by determining the amount of soil transferred from the carpet onto the cloth, using a process as described herein. Indeed, for instance a high amount of soil transfer from the carpet to the cloth indicates the cleaning composition has a relatively good cleaning performance, assuming said cleaning composition has been assessed on a carpet with a known degree of soiling. In addition, it becomes possible for the manufacturer of any carpet cleaning composition, preferably of a spotter and/or a whole carpet cleaning composition, more preferably of a whole carpet cleaning composition, to communicate the cleaning performance of any carpet cleaning composition, preferably of a spotter and/or a whole carpet cleaning composition, more preferably of a whole carpet cleaning composition, by showing the amount of soil transferred from the carpet onto the cloth, using a process as described herein.

The processes according to the present invention may be performed to provide technical evidence of the performance of the cleaning composition to support the marketing of the carpet cleaning compositions. Indeed, the processes herein may be performed/shown in commercials and/or advertisements and/or reports aired/broadcasted/published on television, in video recordings, over the internet, in news papers, in magazines, in adverts or by any other means of written, printed and/or electronic communication. Furthermore, the processes herein may be performed live and/or shown from a recording in front of an audience in stores, consumer homes, expositions, in movie theaters, and the like.

Indeed, the processes herein are particularly suitable to communicate the advantages of carpet cleaning compositions to the public.

In a highly preferred embodiment of the present invention the processes herein comprise the steps of sequentially :
a) contacting a carpet with a first cloth;
b) applying a cleaning composition onto said carpet;
c) contacting said carpet with a second cloth;
d) grading said cloths, wherein the grading is achieved by comparing the initial and finishing cleanliness of the cloths; and
e) comparing the finishing cleanliness of the first and the second cloth,
wherein preferably said first and said second cloth are substantially identical in fabric and initial cleanliness.

In another highly preferred embodiment of the present invention the processes herein comprise the steps of sequentially :
a) contacting a carpet with a cloth ;
b) grading said cloth, to obtain a first grading result;
c) applying a cleaning composition onto said carpet;
d) contacting said carpet with said cloth; and
e) grading said cloth to obtain a second grading result; and
f) comparing the first and second grading result.

The two above mentioned preferred embodiments are particularly suitable to assess the cleaning performance of any kind of carpet cleaning composition, preferably of a spotter and/or a whole carpet cleaning composition, more preferably of a whole carpet cleaning composition, and/or the cleanliness of a carpet. Indeed, to assess the cleanliness of a carpet, a cleaning composition having a known cleaning performance has to be chosen, for the result to be meaningful. Furthermore, to assess the cleaning performance of a cleaning composition, a carpet having a known degree of soiling has to be chosen, for the result to be meaningful. Indeed, on a moderately soiled carpet a cleaning composition having an excellent cleaning performance will show a higher soil transfer rate than a cleaning composition having an average or even bad cleaning performance. Furthermore, using the same cleaning composition on a heavily soiled carpet will show a higher soil transfer rate than on a lightly or even not soiled carpet.

### The composition

The compositions of the present invention are preferably formulated as liquid compositions. Preferred compositions herein are aqueous compositions and therefore, preferably comprise water more preferably in an amount of from 60% to 98%, even more preferably of from 80% to 97% and most preferably 85% to 97% by weight of the total composition.

The pH of the liquid compositions according to the present invention may typically be from 1 to 14. In a preferred embodiment, the recommended pH range is from 1 to 10, preferably from pH 2 to 8, more preferably from pH 3 to 7, even more preferably from pH 3.5 to 7 and most preferably from 3.5 to 6.5. Indeed, it has been surprisingly found that cleaning performance is further improved at these preferred pH ranges. Also these preferred pH ranges contribute to the stability of hydrogen peroxide, when present. Accordingly, the compositions herein may further comprise an acid or base to adjust pH as appropriate.

Preferred acids herein are organic or inorganic acids or mixtures thereof. Preferred organic acids are acetic acid, or citric acid or a mixture thereof. Preferred inorganic acids are sulfuric acid or phosphoric acid or a mixture thereof. A particularly preferred acid to be used herein is an inorganic acid and most preferred is sulfuric acid.

Typical levels of such acids, when present, are of from 0.01% to 1.0%, preferably from 0.05% to 0.8% and more preferably from 0.1% to 0.5% by weight of the total composition.

The bases to be used herein can be organic or inorganic bases. Suitable bases for use herein are the caustic alkalis, such as sodium hydroxide, potassium hydroxide and/or lithium hydroxide, and/or the alkali metal oxides such, as sodium and/or potassium oxide or mixtures thereof. A preferred base is a caustic alkali, more preferably sodium hydroxide and/or potassium hydroxide.

Other suitable bases include ammonia, ammonium carbonate and hydrogen carbonate.

Typical levels of such bases, when present, are of from 0.01% to 1.0%, preferably from 0.05% to 0.8% and more preferably from 0.1% to 0.5% by weight of the total composition.

### Peroxygen bleach

As an optional but highly preferred ingredient the compositions according to the present invention may comprise a peroxygen bleach.

Suitable peroxygen bleaches to be used herein are selected from the group consisting of : hydrogen peroxide; water soluble sources of hydrogen peroxide; organic or inorganic peracids; hydroperoxides; diacyl peroxides; and mixtures thereof.

As used herein a hydrogen peroxide source refers to any compound that produces perhydroxyl ions when said compound is in contact with water. Suitable water-soluble sources of hydrogen peroxide for use herein are selected from the group consisting of percarbonates, perborates and persilicates and mixtures thereof.

Suitable diacyl peroxides for use herein are selected from the group consisting of aliphatic, aromatic and aliphatic-aromatic diacyl peroxides, and mixtures thereof.

Suitable aliphatic diacyl peroxides for use herein are dilauroyl peroxide, didecanoyl peroxide, dimyristoyl peroxide, or mixtures thereof. A suitable aromatic diacyl peroxide for use herein is for example benzoyl peroxide. A suitable aliphatic-aromatic diacyl peroxide for use herein is for example lauroyl benzoyl peroxide. implement.

Suitable organic or inorganic peracids for use herein are selected from the group consisting of : persulphates such as monopersulfate; peroxyacids such as diperoxydodecandioic acid (DPDA); magnesium perphthalic acid; perlauric acid; perbenzoic and alkylperbenzoic acids; and mixtures thereof.

Suitable hydroperoxides for use herein are selected from the group consisting of tert-butyl hydroperoxide, cumyl hydroperoxide, 2,4,4-trimethylpentyl-2-hydroperoxide, di-isopropylbenzene-monohydroperoxide, tert-amyl hydroperoxide and 2,5-dimethyl-hexane-2,5-dihydroperoxide and mixtures thereof.

Preferred peroxygen bleaches herein are selected from the group consisting of : hydrogen peroxide; water soluble sources of hydrogen peroxide; organic or inorganic peracids; hydroperoxides; and diacyl peroxides; and mixtures thereof. More preferred peroxygen bleaches herein are selected from the group consisting of hydrogen peroxide, water soluble sources of hydrogen peroxide and diacyl peroxides and mixtures thereof. Even more preferred peroxygen bleaches herein are selected from the group consisting of hydrogen peroxide, water soluble sources of hydrogen peroxide, aliphatic diacyl peroxides, aromatic diacyl peroxides and aliphatic-aromatic diacyl peroxides and mixtures thereof. Most preferred peroxygen bleaches herein are hydrogen peroxide, water soluble sources of hydrogen peroxide or mixtures thereof.

Typically, the compositions herein comprise from 0.01% to 20%, preferably from 0.5 % to 10%, and more preferably from 1% to 7% by weight of the total composition of a peroxygen bleach, or mixtures thereof.

The presence of a peroxygen bleach in preferred compositions when employed in the process of the present invention contributes to the excellent cleaning and sanitizing performance on various types of soils including on spot stains like bleachable stains (e.g., coffee, beverage, food) of the compositions of the present invention.

By "bleachable stains" it is meant herein any soils or stains containing ingredients sensitive to bleach that can be found on any carpet, e.g., coffee or tea.

### Other optional ingredients

The compositions herein may further comprise conventional carpet cleaning ingredients. Preferably, the compositions herein may comprises a number of additional compounds selected from the group consisting of surfactants, solvents, anti-resoiling agents, stabilising agents, chelating agents, builder systems, radical scavengers, perfumes, dyes, suds suppressing agents, enzymes, photobleaching agents, bleach activators and other minors and mixtures thereof.

## Claims

1. A process of assessing the cleanliness of a carpet comprising the steps of: applying a cleaning composition onto said carpet; contacting said carpet with a cloth; and grading said cloth, wherein the grading is achieved by comparing an initial and a finishing cleanliness of the cloth.

2. A process of assessing the cleaning performance of a cleaning composition comprising the steps of: applying said cleaning composition onto a carpet; contacting said carpet with a cloth; and grading said cloth, wherein the grading is achieved by comparing an initial and a finishing cleanliness of the cloth.

3. A process of assessing the colour safety of a carpet treatment composition comprising the steps of: applying said carpet treatment composition onto a carpet; contacting said carpet with a cloth; and grading said cloth wherein the grading is achieved by comparing an initial and a finishing colour of the cloth.

4. A process according to any of the preceding claims, wherein said composition is a liquid composition.

5. A process according to claim 4, wherein said composition is applied onto the carpet using a spraying device.

6. A process according to any of the preceding claims, wherein said composition comprises a peroxygen bleach.

7. A process according to any of the preceding claims, wherein at least 1 ml of said composition is applied per 1 m² of carpet.

8. A process according to any of the preceding claims, wherein said composition is applied onto at least 0.0001 m² of carpet.

9. A process according to any of the preceding claims, wherein said carpet is soiled/stained at the start of the process.

10. A process according to any of the preceding claims, wherein said cloth has a light color.

11. A process according to any of the preceding claims, wherein said process comprises the steps of sequentially :
a) contacting a carpet with a first cloth;
b) applying a cleaning composition onto said carpet;
c) contacting said carpet with a second cloth;
d) grading said cloths, wherein the grading is achieved by comparing the initial and finishing cleanliness of the cloths; and
e) comparing the finishing cleanliness of the first and the second cloth,
wherein preferably said first and said second cloth are substantially identical in fabric and initial cleanliness.

12. A process according to any of claims 1 to 10, wherein said process comprises the steps of sequentially :
a) contacting a carpet with a, preferably light coloured, more preferably white coloured, cloth ;
b) grading said cloth to obtain a first grading result;
c) applying a cleaning composition onto said carpet;
d) contacting said carpet with said cloth; and
e) grading said cloth, to obtain a second grading result; and
f) comparing the first and second grading results.
